# EUROPEAN PATENT APPLICATION

(11) **EP 1 744 545 A1**
(43) Date of publication of application: **17.01.2007**
(21) Application number: 05730467.7
(22) Date of filing: 14.04.2005
(51) Int. Cl.: H04N 5/225, G03B 17/00, G03B 17/02, H04N 5/232, H04N 101/00

(54) **COMMUNICATION APPARATUS WITH CAMERA**

(30) Priority: 22.04.2004 JP 2004127082
(71) Applicant: MATSUSHITA ELECTRIC INDUSTRIAL CO., LTD., Osaka 571-8501 (JP)
(72) Inventor: KOBAYASHI, Yutaka, Mats. El. Ind. Co., Ltd, IPROC, me, Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/007223
(87) International publication number: WO 2005/104534

(57) **Abstract**

A communication apparatus with a camera, the apparatus correcting inclination of an imaged photo with a simple construction without using a sensor etc. for detecting inclination. In the communication apparatus with a camera, upon receiving a signal, from an output selection section (102), that a button has been depressed, a photo imaging section (103) outputs image data of an imaged photo of an object to a photo-inclination-information adding section (105). A directional-information converting section (104) memorizes a button and the directions of the taken image in a matched manner, and based on the inputted signal of the button depression, the directional-information converting section (104) outputs, to the photo-inclination-information adding section (105), information on the direction corresponding to the depressed button. The photo-inclination-information adding section (105) adds information on the direction of the imaging to the image data of the imaged photo, and the data after the addition are outputted to a photo-image storage section (106).

## Description

### Technical Field

The present invention relates to a communication apparatus with a camera, and particularly relates to a communication apparatus with a camera appropriate for use in apparatus equipped with both a mobile telephone function and a camera function.

### Background Art

Conventionally, a camera apparatus does not add tilt information to photographs that are taken. As a result, when the taken picture is observed later, the top, bottom, left and right of a displayed image do not correlate so that a user needs to correct the orientation of the displayed image or change the orientation of the observed terminal apparatus that is displaying.

In order to resolve this problem, an apparatus using a sensor for detecting tilt of the camera and then add adding tilt detected by the sensor to data of a taken image has been proposed (for example, Patent Document 1).
Japanese Patent Document 1: Japanese Patent Application Laid-Open No. 2001-119665.

### Disclosure of Invention

### Problems to be Solved by the Invention

However, the apparatus of the related art requires new devices that incorporate a sensor for detecting tilt of the camera. For example, with a mobile telephone with a camera, there is little space to incorporate new parts such as sensors.

It is therefore an object of the present invention to correct tilt of a photograph that is taken with a simple configuration without using sensors etc. for detecting tilt.

### Means for Solving the Problem

Communication apparatus with a camera of the present invention adopts a configuration comprising a casing, a plurality of buttons provided at a surface of the casing, a photographing section that photographs a subject when a predetermined button is pressed down and acquires image data, a photographing direction information conversion section that generates photographing direction information indicating a direction of the subject to a predetermined direction of the casing corresponding to a button pressed down at the time of photographing the subject, and an information adding section that adds and stores the photographing direction information to image data.

Display apparatus of the present invention adopts a configuration comprising a tilt information determining section that extracts photographing direction information indicating the direction of the subj ect to a predetermined direction of the casing of the communication apparatus with a camera added in image data acquired by the communication apparatus with a camera of the communicating party photographing the subject, and determines tilt of the casing of the communication apparatus with a camera at the time of photographing, a first image rotating section that rotates the image data based on tilt of the casing of the communication apparatus with a camera at the time of the photographing, and a display section that displays the image data after rotation.

A photographing method of the present invention adopts a method for communication apparatus with a camera equipped with a casing and a plurality of buttons provided at a surface of the casing, comprising the steps of photographing a subject when a predetermined button is pressed down and acquiring image data, generating photographing direction information indicating a direction of the subject to a predetermined direction of the casing so as to correspond to a button pressed down at the time of photographing the subject, and adding the photographing direction information to the image data and storing in memory.

A display method of the present invention adopts a method comprising the steps of extracting photographing direction information indicating the direction of the subject to a predetermined direction of the casing of the communication apparatus with a camera added in image data acquired by the communication apparatus with a camera of the communicating party photographing the subject, and determining tilt of the casing of the communication apparatus with a camera at the time of photographing, rotating the image data based on tilt of the casing of the communication apparatus with a camera at the time of the photographing, and displaying the image data after rotation.

### Advantageous Effect of the Invention

According to communication apparatus with a camera of the present invention, it is possible to correct tilt of a photograph taken with a simple configuration without using a sensor etc. for detecting tilt by adding information for the direction of a subject to image data that is taken so as to correspond to a button pressed down taking as a reference by the apparatus (casing).

Further, it is possible to display a photograph with tilt of the taken photograph corrected with a simple configuration without using a sensor etc. for detecting tilt by adding information for the direction of a subject to image data reproduced so as to correspond to the pressing down of a button taken as a reference by the apparatus.

Further, it is possible to improve operability of the communication apparatus with a camera having an auto focus function by providing a focus lock button for fixing a focal point of an auto focus function. For example, it is possible to improve operability of the communication apparatus with a camera having an auto focus function without using a switch with two stages where a button is halfway pressed down while adjusting a focal point, and then fully pressed down to take a photograph.

### Brief Description of the Drawings

FIG.1 is a block view showing a configuration of a communication apparatus with a camera and a display apparatus according to Embodiment 1 of the present invention;
FIG.2 shows an example of a table an output selection section of a camera apparatus of the above embodiment is equipped with;
FIG.3 shows an example of a table built into a direction information conversion section of a camera apparatus of the above embodiment;
FIG.4 shows an example of a communication apparatus with a camera of the above embodiment;
FIG.5 is a block view showing a configuration of a communication apparatus with a camera according to Embodiment 2 of the present invention;
FIG.6 is a block view showing a configuration of a display apparatus according to Embodiment 3 of the present invention;
FIG.7 shows an example of a table built into a direction information conversion section of a display apparatus of the above embodiment;
FIG.8 is a block view showing a configuration of a display apparatus according to Embodiment 3 of the present invention; and
FIG.9 is a block view showing a configuration of a display apparatus according to Embodiment 4 of the present invention.

### Best Mode for Carrying Out the Invention

Embodiments of the present invention will now be described in detail with reference to the drawings.

### (Embodiment 1)

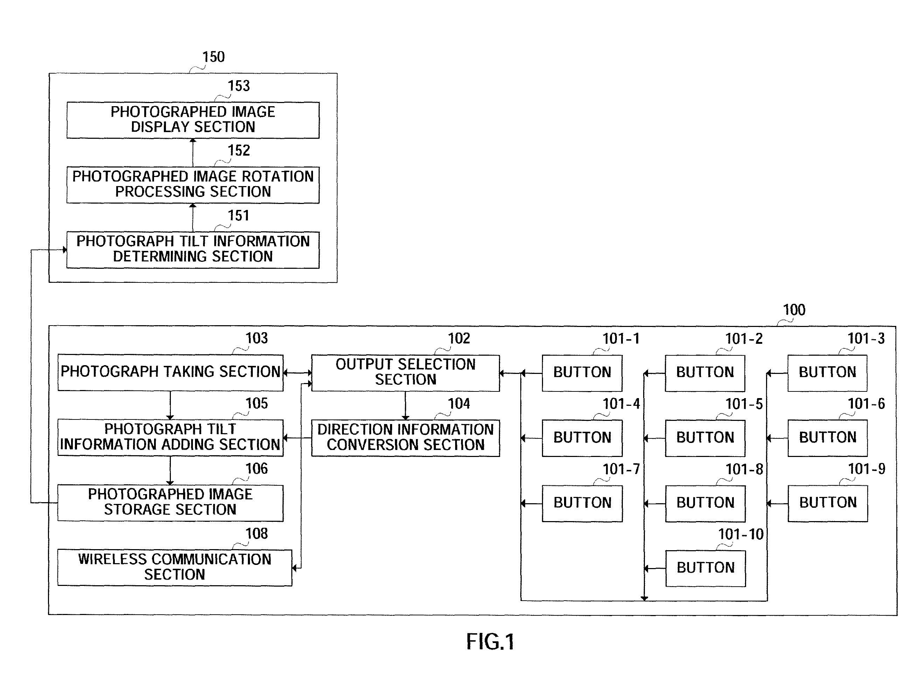

FIG.1 is a block view showing a configuration of a communication apparatus with a camera and a display apparatus according to Embodiment 1 of the present invention. Communication apparatus 100 with a camera of FIG.1 is mainly composed of buttons 101-1 to 101-10, output selection section 102, photograph taking section 103, direction information conversion section 104, photograph tilt information adding section 105, photographed image storage section 106, and wireless communication section 108. Further, display apparatus 150 is mainly composed of photograph tilt information determining section 151, photographed image rotation processing section 152, and photographed image display section 153.

In FIG.1, buttons 101-1 to 101-10 detect operations of pressing down etc., and output that detection has been made to output selection section 102 by an electrical signal, etc. For example, buttons 101-1 to 101-10 correspond to numerals "1" to "9" and "0."

In the event that a photograph is taken by photograph taking section 103, output selection section 102 only outputs output from outputs from buttons 101-1 to 101-10 indicating the direction as valid to direction information conversion section 104.

Further, in the event that wireless communication section 108 is carrying out wireless communication (for example, a telephone call except the periodic exchange of control signals, or wireless communication such as data transfer), output selection section 102 outputs output from buttons 101-1 to 101-10 to wireless communication section 108.

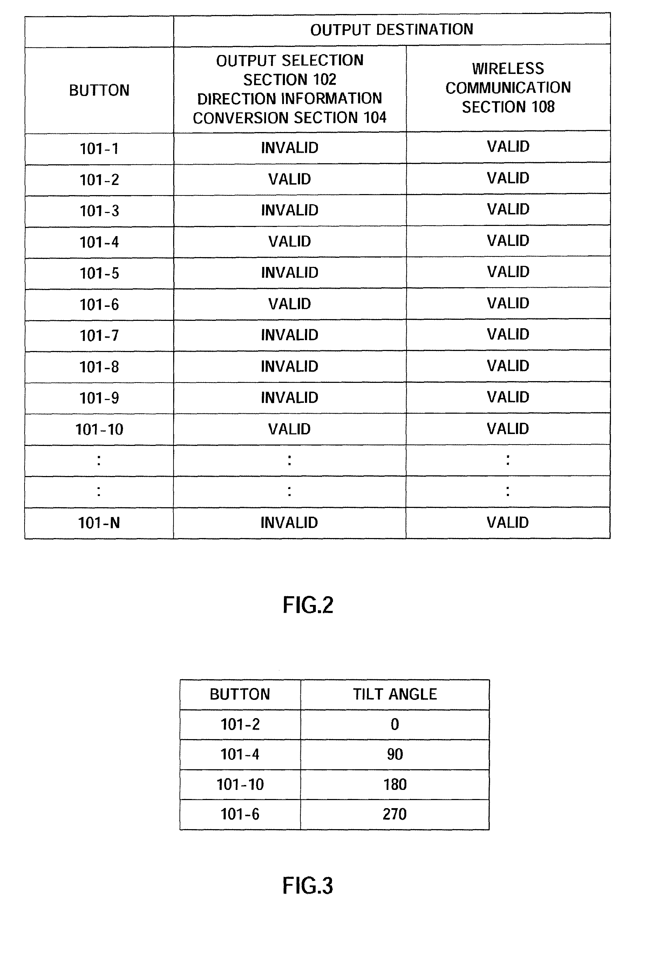

FIG.2 shows an example of a table an output selection section of a camera apparatus of this embodiment is equipped with. As shown in FIG.2, output selection section 102 outputs a signal indicating that a button is pressed down to direction information conversion section 104 only in the event, for example, that buttons 101-2, 101-4, 101-6 and 101-10 corresponding to numerals "2", "4", "6" and "0" of buttons 101-1 to 101-10 are pressed down. Then, in the event that wireless communication section 108 is carrying out wireless communication, the outputs of buttons 101-1 to 101-10 are outputted to wireless communication section 108.

In the event that a signal for pressing down a button is received from output selection section 102, photograph taking section 103 outputs image data for a photograph taken for a subject to photograph tilt information adding section 105. Further, photograph taking section 103 outputs operating conditions to output selection section 102.

Direction information conversion section 104 stores the button and the direction of photographing the image in a correlated manner, and outputs information for a direction corresponding to the button pressed down from the inputted signal for pressing down the button to photograph tilt information adding section 105.

FIG.3 shows an example of a table built into a direction information conversion section of a camera apparatus of the above embodiment. In FIG.3, for example, button 101-2 corresponding to numeral "2" takes that the vertical direction of the subject photographed and the vertical direction of communication apparatus 100 with a camera are the same, i.e. tilt is 0 degrees. Further, button 101-6 corresponding to numeral "6" takes the camera to be tilted by 270 degrees in a clockwise direction from the vertical direction of communication apparatus 100 with a camera as viewing the subject to be photographed from above. Similarly, button 101-10 corresponding to numeral "0" takes the camera to be tilted by 180 degrees in a clockwise direction from the vertical direction of communication apparatus 100 with a camera as viewing the subject to be photographed from above. Further, button 101-4 corresponding to numeral "4" takes the camera to be tilted by 90 degrees in a clockwise direction from the vertical direction of communication apparatus 100 with a camera as viewing the subject to be photographed from above.

Photograph tilt information adding section 105 adds photographing direction information to image data for a photograph that is taken and outputs data after adding to photographed image storage section 106.

Photographed image storage section 106 then stores image data with direction information added.

Wireless communication section 108 specifies a communicating party by information for pressing down a button outputted from output selection section 102 and carries out wireless communication. For example, a telephone number is specified for a communicating party from pressing down of the buttons and a call is made. Further, wireless communication section 108 outputs operating conditions to output selection section 102.

Photograph tilt information determining section 151 extracts image data with direction information added from photographed image storage section 106, analyzes this image data, extracts direction information and image data respectively, and outputs the extracted information and data to photographed image rotation processing section 152.

Photographed image rotation processing section 152 carries out rotation processing on the image based on direction data and outputs image data after rotation processing to photographed image display section 153. For example, in the event that the vertical direction of communication apparatus 100 with a camera is tilted in an anti-clockwise direction by 90 degrees as viewed from above the subject being photographed, the photographed image is an image tilted by 90 degrees in a clockwise direction. Photographed image rotation processing section 152 then carries out image processing to rotate the image by 90 degrees in an anti-clockwise direction and outputs image data after rotation processing to photographed image display section 153.

Photographed image display section 153 displays image data after rotation processing at photographed image rotation processing section 152.

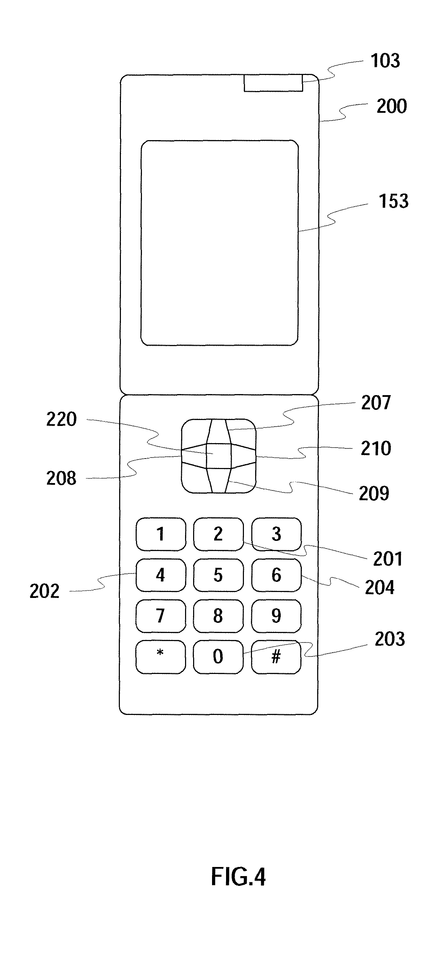

A more specific example of communication apparatus 100 with a camera is shown in FIG.4. FIG. 4 shows an example of communication apparatus with a camera of this embodiment. Communication apparatus 200 with a camera of FIG.4 is an example where communication apparatus 100 with a camera of FIG.1 and display apparatus 150 are integral.

In FIG.4, photograph taking section 103 and photographed image display section 153 respectively correspond to FIG.1. Photographing button 201 of FIG.4 corresponds to button 101-2 of FIG.1, photographing button 202 of FIG.4 corresponds to button 101-4 of FIG.1, photographing button 203 of FIG.4 corresponds to button 101-10 of FIG.1, and photographing button 204 of FIG.4 corresponds to button 101-6 of FIG.1.

For example, in the event that photographing is carried out with the casing of communication apparatus 200 with a camera vertical, i.e. in the case that photographing is carried out with the vertical direction of the casing of communication apparatus 200 with a camera and the vertical direction of the subject in the same direction, photographing button 201 is used as the button for pressing down as the camera shutter.

In the event that photographing is carried out with the casing of communication apparatus 200 with a camera tilted to the right so as to be horizontal, i.e. in the case that photographing is carried out with the vertical direction of the casing of communication apparatus 200 with a camera tilted by 90 degrees in a clockwise direction from the vertical direction of the subject, photographing button 202 is used as the button for pressing down as the camera shutter.

Further, in the event that photographing is carried out with the casing of communication apparatus 200 with a camera upside down, i.e. in the case that photographing is carried out with the vertical direction of the casing of communication apparatus 200 with a camera tilted by 180 degrees in a clockwise direction from the vertical direction of the subject, photographing button 203 is used as the button for pressing down as the camera shutter.

Moreover, in the event that photographing is carried out with the casing of communication apparatus 200 with a camera tilted to the left so as to be horizontal, i.e. in the case that photographing is carried out with the vertical direction of the casing of communication apparatus 200 with a camera tilted by 270 degrees in a clockwise direction from the vertical direction of the subject, photographing button 204 is used as the button for pressing down as the camera shutter.

When a button corresponding to any of these ways of photographing is pressed down, at photograph taking section 103, a photograph image is taken and camera tilt information corresponding to the button pressed down is added to data for the image at photograph tilt information adding section 105 and stored in photographed image storage section 106.

Photographed image storage section 106 may be, for example, a detachable card-type memory card, a typical semiconductor memory or hard disc memory, or any of various storage apparatus configured at a connection destination connected by wired or wireless.

Further, it is also desirable that the tilt information for the camera be converted to a format for use as camera information such as, for example, Exif format, etc.

Image data with tilt information added and stored in photographed image storage section 106 is outputted to display apparatus 150. In the event of observing this photographed image data, at photograph tilt information determining section 151, for example, tilt information for the camera described by the Exif format is deciphered, and tilt information for the camera at the time of photographing is outputted to photographed image rotation processing section 152.

Photographed image rotation processing section 152 is configured from frame memory etc., writes in and reads out image data according to tilt information for the camera, carries out rotation processing so that the vertical direction of the photographed image data is the same as the vertical direction of the subject, and hands data over to photographed image display section 153 as a photographed image. Photographed image display section 153 then displays the photograph with the vertical direction of the subject displayed in the correct direction.

According to communication apparatus with a camera of this embodiment, it is possible to correct tilt of a photograph taken with a simple configuration without using a sensor etc. for detecting tilt by adding information for the direction of a subject to image data corresponding to a button pressed down when photographing a subject taken as a reference by the camera.

In the above description, an example where the tilt is in 90 degree units is described, but the angle of tilt is not particularly limited. For example, 45 degree units or 180 degree units may be adopted.

For example, in the event that horizontal and vertical lengths of a display surface of photographed image display section 153 are different, it is possible not to rotate to the left or right by 90 degrees, but to only rotate by 0 or 180 degrees. Further, in the event that vertical and horizontal lengths of photographed image display section 153 are different, photographed image rotation processing section 152 may expand or compress the size of an image after rotation processing in either the vertical or horizontal direction of the image to be displayed so that the image fits.

Further, an example is described in FIG.4 where communication apparatus 100 with a camera and display apparatus 150 are integrated, but communication apparatus 100 with a camera and display apparatus 150 may also be provided separately. For example, display apparatus 150 may use an equipment capable of displaying photographs such as, for example, a personal computer etc., and execute the functions of photograph tilt information determining section 151 and photographed image rotation processing section 152 by software, and display on a display.

Further, the images to be recorded are not limited to still images, and may be applied to moving images.

Moreover, in the above description, tilt information is added when photographing buttons 201 to 204 are pressed down, but tilt information may also be added in cases where other buttons are pressed down. For example, tilt information can be added to image data in the event that cursor up key 207, cursor left key 208, cursor down key 209, or cursor right key 210 are pressed down. In this case, if cursor up key 207 is pressed down, the vertical direction of the subject photographed and the vertical direction of the casing of communication apparatus 200 with a camera are the same, i.e. tilt is 0 degrees.

Further, in the event that cursor left key 208 is pressed down, it is taken that the vertical direction of the casing of communication apparatus 200 with a camera is tilted by 90 degrees in a clockwise direction as viewed from above the subject being photographed. Similarly, in the event that cursor down key 209 is pressed down, it is taken that the vertical direction of the casing of communication apparatus 200 with a camera is tilted by 180 degrees as viewed from above the subject being photographed. In the event that cursor right key 210 is pressed down, it is taken that the vertical direction of the casing of communication apparatus 200 with a camera is tilted 270 degrees in a clockwise direction as viewed from above the subject being photographed.

Further, timing of pressing down a button corresponding to the tilt is not particularly limited, and may be carried out in a series of procedures for taking a photograph. For example, it is also possible to press down focus lock button 220, line up the focal point of the subject, and then add tilt information corresponding to photographing buttons 201 to 204, cursor up key 207, cursor left key 208, cursor down key 209, or cursor right key 210 pressed down afterwards to the photographed image data.

### (Embodiment 2)

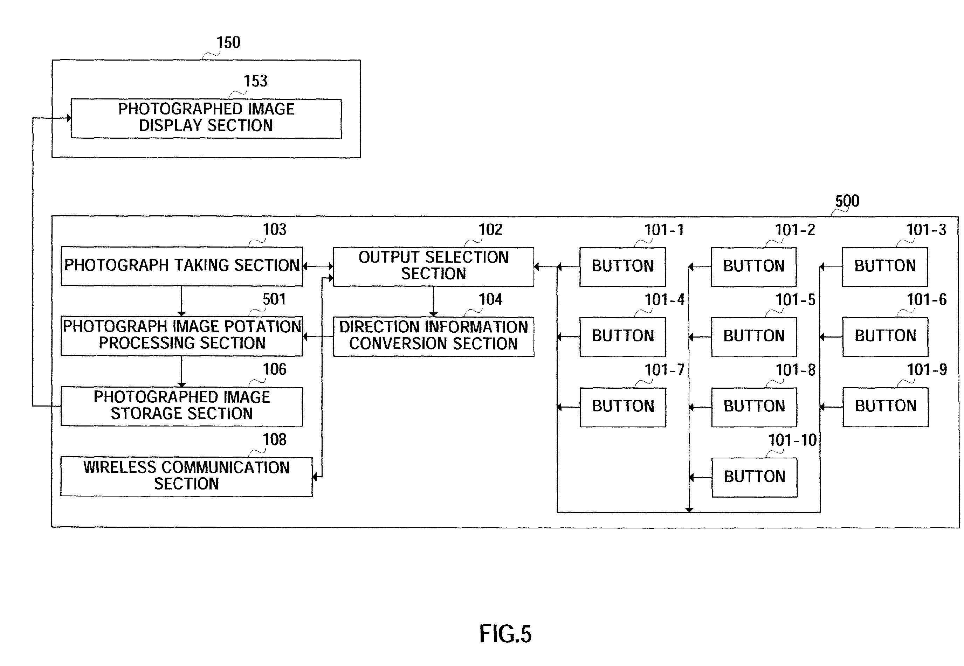

FIG.5 is a block view showing a configuration of a communication apparatus with a camera according to Embodiment 2 of the present invention. Here, the same components as for FIG.1 are assigned the same numerals and detailed descriptions thereof will be omitted. Communication apparatus 500 with a camera of FIG.5 includes photographed image rotation processing section 501, and differs from communication apparatus 100 with a camera of FIG.1 in that image rotation processing is carried out on the side of the communication apparatus with a camera.

In FIG.5, in the event that a signal for pressing down a button is received from output selection section 102, photograph taking section 103 outputs image data for a photograph taken for a subject to photographed image rotation processing section 501.

Direction information conversion section 104 stores the button and the direction of photographing the image in a correlated manner, and outputs information for a direction corresponding to the button pressed down from the inputted signal for pressing down the button to photographed image rotation processing section 501.

Photographed image rotation processing section 501 carries out processing for rotating images of image data taken at photograph taking section 103 based on direction data outputted from direction information conversion section 104 and outputs image data after rotation processing to photographed image storage section 106.

Photographed image display section 153 displays images after rotation processing stored in photographed image storage section 106.

According to the communication apparatus with a camera of this embodiment, it is possible to display an image with the vertical direction of the photographed subject matches with the vertical direction of the display surface without considering tilt of the camera at the time of photographing, by carrying out rotation processing of an image at the side of communication apparatus with a camera based on the direction of a subject taken as a reference by a camera in image data corresponding to a button pressed down at the time of photographing the subject.

### (Embodiment 3)

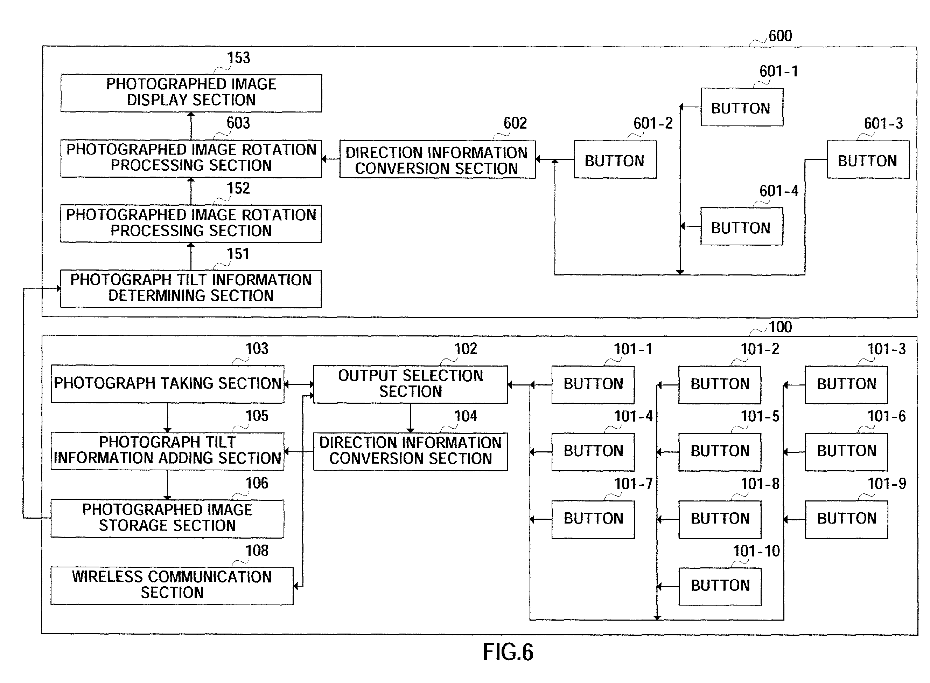

FIG.6 is a block view showing a configuration of a display apparatus according to Embodiment 3 of the present invention. Here, the same components as for FIG.1 are assigned the same numerals and detailed descriptions thereof will be omitted. Display apparatus 600 of FIG. 6 includes buttons 601-1 to 601-4, direction information conversion section 602, and photographed image rotation processing section 603 and differs from display apparatus of FIG.1 in that in the event that a button corresponding to tilt of display apparatus displaying an image is pressed down, an image tilted corresponding to the button pressed down is subjected to rotation processing, and recorded image is reproduced and displayed.

Buttons 601-1 to 601-4 detect operations of pressing down etc. and output that detection has been made to direction information conversion section 602.

Direction information conversion section 602 stores the button and tilt of display apparatus 600 in a correlated manner, and outputs information for a direction corresponding to the button pressed down from the inputted signal for pressing down the button to photographed image rotation processing section 603.

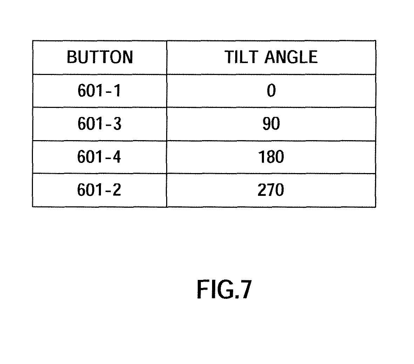

FIG.7 shows an example of a table built into a direction information conversion section of display apparatus of this embodiment. In FIG.7, button 601-1 takes tilt in a vertical direction of display apparatus 600 to be 0 degrees. Further, button 601-2 takes the vertical direction of display apparatus 600 to be tilted 270 degrees in a clockwise direction. Similarly, button 601-4 takes the vertical direction of display apparatus 600 to be tilted by 180 degrees. Further, button 601-3 takes the vertical direction of display apparatus 600 to be tilted 90 degrees in a clockwise direction.

Photographed image rotation processing section 603 carries out rotation processing on images outputted from photographed image rotation processing section 152 based on direction data outputted from direction information conversion section 602 and outputs image data after rotation processing to photographed image display section 153.

For example, in the event of reproducing an image with tilt information for the camera of a clockwise direction of 90 degrees added at photographed image storage section 106, first, the stored image is rotated by 90 degrees at photographed image rotation processing section 152.

In the event that button 601-1 is then pressed down, photographed image rotation processing section 603 outputs image data to photographed image display section 153 without carrying out rotation processing. As a result, photographed image display section 153 displays an image that is the stored image subjected to rotation processing of 90 degrees in a clockwise direction.

In the event that button 601-2 is pressed down, photographed image rotation processing section 603 further outputs image data outputted from photographed image rotation processing section 152 and subjected to rotation processing of 270 degrees to photographed image display section 153. As a result, photographed image display section 153 displays an image that is the stored image subjected to rotation processing (i.e. the image is not rotated) of 360 degrees in a clockwise direction.

In the event that button 601-3 is pressed down, photographed image rotation processing section 603 further outputs image data outputted from photographed image rotation processing section 152 and subjected to rotation processing of 90 degrees to photographed image display section 153. As a result, photographed image display section 153 displays an image that is the stored image subjected to rotation processing of 180 degrees in a clockwise direction.

In the event that button 601-4 is pressed down, photographed image rotation processing section 603 further outputs image data outputted from photographed image rotation processing section 152 and subjected to rotation processing of 180 degrees to photographed image display section 153. As a result, photographed image display section 153 displays an image that is the stored image subjected to rotation processing of 270 degrees in a clockwise direction.

In this way, according to display apparatus of this embodiment, in the event that a button corresponding to tilt of display apparatus displaying an image is pressed down, an image recorded for an image tilted corresponding to a button pressed down subjected to rotation processing is further subjected to rotation processing based on tilting of camera apparatus for the time of photographing, and reproduced and displayed. As a result, it is possible to display the recorded image in the correct direction even in a state when displayed at an arbitrary angle.

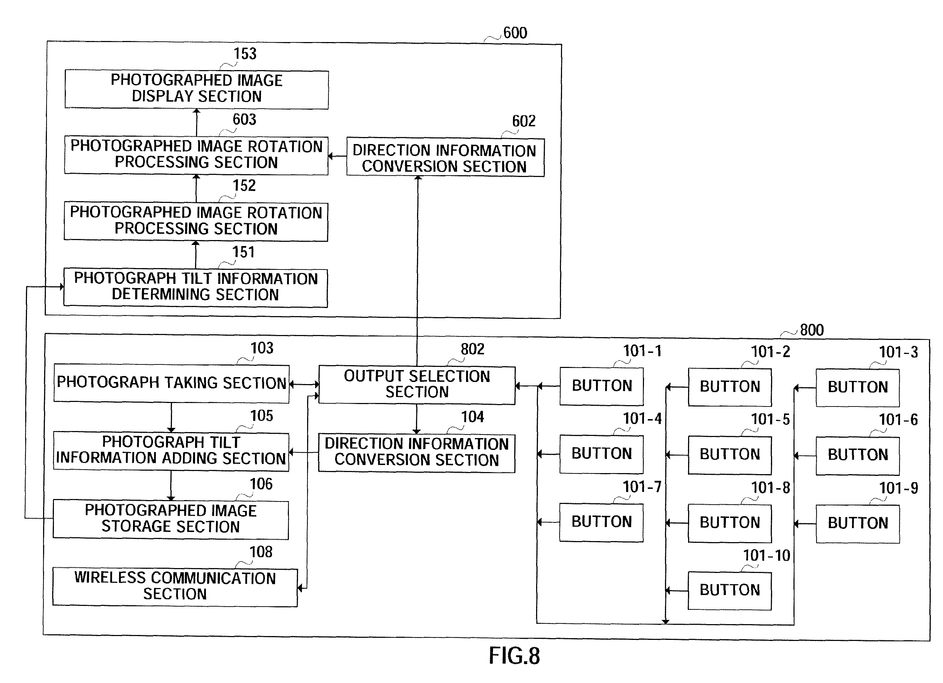

A configuration where buttons 601-1 to 601-4 are common with buttons 101-1 to 101-10 may be also possible. FIG.8 is a block view showing a configuration of a display apparatus according to Embodiment 3 of the present invention for this case. Here, the same components as for FIG. 1 or FIG.6 are assigned the same numerals and detailed descriptions thereof will be omitted.

In the event that a photograph is taken by photograph taking section 103, output selection section 802 only outputs output from outputs from buttons 101-1 to 101-10 indicating the direction as valid to direction information conversion section 104.

Further, in the event that wireless communication section 108 is carrying out wireless communication (for example, a telephone call except the periodic exchange of control signals, or wireless communication such as data transfer), output selection section 802 outputs output from buttons 101-1 to 101-10 to wireless communication section 108.

In the event that photograph taking section 103 does not take a photograph and wireless communication section 108 does not carry out wireless communication, output selection section 802 only outputs outputs from valid buttons indicating direction of outputs from buttons 101-1 to 101-10 to direction information conversion section 602.

In this embodiment, image rotation processing corresponding to the tilt of the communication apparatus with a camera and the image rotation processing corresponding to the tilt of the display apparatus are carried out individually, but it is also possible for these two rotation processes to be carried out as one rotation process. For example, this may be implemented by adding a rotation angle for image rotation processing corresponding to tilt of the communication apparatus with a camera and a rotation angle for image rotation processing corresponding to tilt of the display apparatus, and carrying out an image rotation processing by added rotation angle.

### (Embodiment 4)

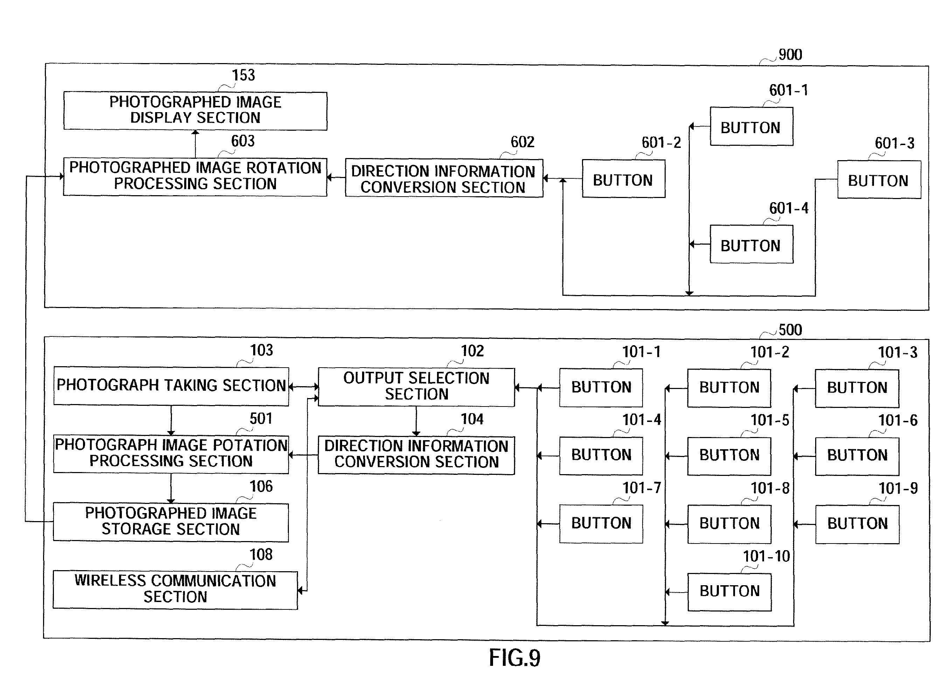

FIG.9 is a block view showing a configuration of a display apparatus according to Embodiment 4 of the present invention. Here, the same components as for FIG.6 are assigned the same numerals and detailed descriptions thereof will be omitted. Display apparatus 900 of FIG.9 includes photographed image rotation processing section 603, and differs from display apparatus 600 of FIG.6 in that image rotation processing is carried out on the side of the communication apparatus with a camera.

Embodiment 4 is an example combining Embodiment 2 and Embodiment 3.

In FIG.9, direction information conversion section 104 stores a button and the direction of photographing the image in a correlated manner, and outputs information for a direction corresponding to the button pressed down from the inputted signal for pressing down the button to photographed image rotation processing section 501.

Photographed image rotation processing section 501 carries out processing for rotating images of image data taken at photograph taking section 103 based on direction data outputted from direction information conversion section 104 and output image data after rotation processing to photographed image storage section 106.

Photographed image rotation processing section 603 carries out rotation processing on images outputted from photographed image storage section 106 based on direction data outputted from direction information conversion section 602 and outputs image data after rotation processing to photographed image display section 153.

For example, in the event that button 601-1 is pressed down when an image is read out from photographed image storage section 106 where a photographed image is subjected to rotation processing of 90 degrees, and reproduced, photographed image rotation processing section 603 outputs image data to photographed image display section 153 without carrying out rotation processing.

In the event that button 601-2 is pressed down, photographed image rotation processing section 603 further outputs image data read out from photographed image storage section 106 and subjected to rotation processing of 270 degrees to photographed image display section 153.

In the event that button 601-3 is pressed down, photographed image rotation processing section 603 further outputs image data read out from photographed image storage section 106 and subjected to rotation processing of 90 degrees and to photographed image display section 153.

In the event that button 601-4 is pressed down, photographed image rotation processing section 603 further outputs image data read out from photographed image storage section 106 and subjected to rotation processing of 180 degrees and to photographed image display section 153.

According to the display apparatus of this embodiment, rotation processing of an image is carried out on the side of communication apparatus with a camera based on the direction of a subject taking a camera as a reference in image data corresponding to a button pressed down at the time of photographing a subject. In the event that a button corresponding to tilt of display apparatus displaying an image is pressed down, by reproducing and displaying an image recorded as a result of subjecting an image tilted corresponding to the button pressed down to rotation processing, it is possible to display the recorded image in the correct direction even if the recorded image is displayed at an arbitrary angle.

The present invention is not limited to the above embodiments, and various modifications and implementation may be possible. For example, in the above embodiments, a case has been described where the method is carried out as communication apparatus with a camera and display apparatus. However, it is not limited to this, and this display method may also be carried out as a software.

For example, a program executing the display method may be stored in advance in ROM (Read Only Memory), and this program may be made to operate by a CPU (Central Processor Unit).

Further, a program executing the above display method may be stored in a readable storage medium by a computer, the program stored in the storage medium may be recorded in RAM (Random Access Memory) of a computer, and the computer may be made to operate in accordance with this program.

The present application is based on Japanese Patent Application No. 2004-127082 filed on April 22, 2004, the entire content of which is expressly incorporated herein by reference.

### Industrial Applicability

The present invention is appropriate for use in communication apparatus with a camera such as a mobile telephone.

## Claims

1. A communication apparatus with a camera, comprising:
a casing;
a plurality of buttons provided at a surface of the casing;
a photographing section that photographs a subject when a predetermined button is pressed down and acquires image data;
a photographing direction information conversion section that generates photographing direction information indicating a direction of the subject to a predetermined direction of the casing corresponding to a button pressed down at the time of photographing the subject; and
an information adding section that adds and stores the photographing direction information to the image data.

2. The communication apparatus with a camera according to claim 1, further comprising a focus lock button that fixes a focal point of an auto focus function.

3. A communication apparatus with a camera, comprising:
a casing;
a plurality of buttons provided at a surface of the casing;
a photographing section that photographs a subject when a predetermined button is pressed down and acquires image data;
a photographing direction information conversion section that generates photographing direction information indicating a direction of the subject to a predetermined direction of the casing corresponding to a button pressed down at the time of photographing the subject; and
an image rotating section that carries out processing to rotate the image data based on the photographing direction information so that an image direction the subject is photographed in matches with a predetermined direction of the casing.

4. A Communication apparatus with a camera, comprising:
a casing;
a plurality of buttons provided at a surface of the casing;
a photographing section that photographs a subject when a predetermined button is pressed down and acquires image data;
a photographing direction information conversion section that generates photographing direction information indicating a direction of the subject to a predetermined direction of the casing corresponding to a button pressed down at the time of photographing the subject;
an information adding section that adds and stores the photographing direction information to the image data;
a tilt information determining section that determines tilt of the casing based on the photographing direction information;
a first image rotating section that rotates the image data based on tilt of the casing at the time of the photographing; and
a display section that displays the image data after rotation.

5. The communication apparatus with a camera according to claim 4, further comprising:
a display direction information conversion section that generates display direction information indicating a direction of rotation of a displayed image corresponding to a button pressed down at the time of displaying image data; and
a second image rotating section that rotates image data outputted from the first image rotating section based on the display direction information,
wherein the display section displays image data processed at the second image rotating section.

6. A display apparatus comprising:
a tilt information determining section that extracts photographing direction information indicating the direction of the subject to a predetermined direction of the casing of the communication apparatus with a camera added in image data acquired by the communication apparatus with a camera of the communicating party photographing the subject, and determines tilt of the casing of the communication apparatus with a camera at the time of photographing;
a first image rotating section that rotates the image data based on tilt of the casing of the communication apparatus with a camera at the time of the photographing; and
a display section that displays the image data after rotation.

7. The Display apparatus according to claim 6, further comprising:
a plurality of buttons;
a display direction information conversion section that generates display direction information indicating a direction of rotation of a displayed image corresponding to a button pressed down at the time of displaying image data; and
a second image rotating section that rotates image data outputted from the first image rotating section based on the display direction information,
wherein the display section displays image data processed at the second image rotating section.

8. A photographing method for communication apparatus with a camera equipped with a casing and a plurality of buttons provided at a surface of the casing, comprising the steps of:
photographing a subject when a predetermined button is pressed down and acquiring image data;
generating photographing direction information indicating a direction of the subject to a predetermined direction of the casing so as to correspond to a button pressed down at the time of photographing the subject; and
adding the photographing direction information to the image data and storing in memory.

9. A display method comprising the steps of:
extracting photographing direction information indicating the direction of the subject to a predetermined direction of the casing of the communication apparatus with a camera added in image data by the communication apparatus with a camera of the communicating party photographing the subject, and determining tilt of the casing of the communication apparatus with a camera at the time of photographing;
rotating the image data based on tilt of the casing of the communication apparatus with a camera at the time of the photographing; and
displaying the image data after rotation.
